# EUROPEAN PATENT SPECIFICATION

(11) **EP 2 969 371 B1**
(45) Date of publication and mention of the grant of the patent: **01.05.2019**
(21) Application number: 13723569.3
(22) Date of filing: 12.03.2013
(51) Int. Cl.: B23K 26/36, F16K 17/16

(54) **SAFETY DISCS AND METHOD**
SICHERHEITSPLATTEN UND METHODE
DISQUES DE SÉCURITÉ ET PROCÉDÉ

(43) Date of publication of application: 20.01.2016
(73) Proprietor: Donadon Safety Discs and Devices S.R.L., 20011 Corbetta (MI) (IT)
(72) Inventor: MODENA, Mario, 20149 Milano (IT); DONADON, Antonio Ruggero Sante, 20019 Settimo Milanese (Milano) (IT)
(74) Representative: Inchingalo, Simona
(86) International application number: PCT/IT2013/000073
(87) International publication number: WO 2014/141307

(56) References cited:
- CA-C- 1 304 650
- US-A1- 2010 140 238
- US-A1- 2010 224 603
- US-A1- 2012 012 571

## Description

This invention relates to a safety disc, that is to say, a flat disc or dome-shaped element having a predetermined failure threshold, as known for instance from US-A-2012/0012571.

More specifically, this invention is used advantageously in the production of devices applied to systems along pneumatic or hydraulic lines for ensuring the necessary safety measures for the system which can be subjected to conditions which differ to the design conditions.

Yet more specifically, the devices are applied to emergency lines for completely closing the conduit on which they are applied.

A high pressure fluid acts in one of the half-spaces defined by the device, whilst a lower pressure, for example atmospheric pressure, acts on the opposite half-space.

Alternatively, the prior art safety discs can protect the systems which operate at sub-atmospheric pressure. In this case, too, the device is subjected to a pressure difference which acts between the two opposite surfaces of the device.

When the difference between the pressure acting inside the system and the external pressure exceeds a predetermined threshold safety value, this disc opens tearing itself and allows the external fluid to flow inside the system, thereby avoiding damage to parts of the system.

Usually, the safety discs referred to have a disc-shaped configuration with a surface on which the pressurised fluid acts; the surface can be flat, concave or convex.

Alternatively, the discs have a square or rectangular shape according to the conduit on which they must be applied.

The discs which do not have any predetermined fracture line open in an undefined manner with separation of certain parts. For this reason, discs with predetermined fracture lines, which can be obtained with incisions of various shape, either through or blind, are preferably used in many cases. In the case of through cuts or holes, a second continuous layer is necessary, weaker than the calibrated cross-section, ensuring the pneumatic and/or hydraulic seal. This is not necessary in the case of blind holes or non-through cuts.

In any case, these discs can have a plurality of blind cuts positioned on a surface of the disc in a suitable configuration in such a way as to define corresponding predetermined fracture lines.

In other words, when the threshold value of the fluid pressure is exceeded, the safety disc fails at the predetermined fracture lines.

During the production of these discs, particular attention must be paid to the execution of the non-through cuts in terms of depth, length and width, but also with regard to maintaining the mechanical characteristics of the residual disc material next to the non-through cuts. More specifically, it is desirable that this material keeps its crystalline-metallurgical structure unchanged.

In effect, the dimensions of non-through cuts are selected as a function of the value of the predetermined pressure threshold at which the disc must fail.

Undesirable mechanical alterations and/or alterations in the crystalline structure, which are difficult to evaluate, can modify this threshold value and reduce the operational life and the resistance to stresses, especially of a cyclical nature. In this way, the safety disc starts to operate before or after this value is reached.

Generally, the non-through cuts are made mainly in a mechanical manner. More specifically, the non-through cuts can be made by means of permanent deformation using punches and relative or dies and counter dies.

Alternatively, the non-through cuts are made by micro-milling. In other words, a portion of the material is eliminated mechanically with great precision.

The methods described in all the cases imply the use of tools which come into contact with the safety disc.

Moreover, it is not possible with these systems to obtain shallow non-through cuts which would be useful for the incision, without drilling through, of discs with a very small thickness, of a few tens of microns.

Moreover, with the use of mechanical cutting it is not possible to obtain perfectly clean incisions in the disc, that is to say, completely free of waste material resulting from the cut which can alter the mechanical properties and the failure threshold of the disc.

In other words, the mechanical cutting leaves residue of waste material inside the non-through incision, which therefore poses limits on the dimensions of the non-through cut which can be made and on the precision which can be obtained in terms of repeatability of the disc.

Alternative techniques comprise non-through incision methods which use electropolishing possibly after the incision by laser of a protective isolating layer. In this type of method described in US patent application no. 2006/0237457, the disc is covered in advance with a layer of protective material. In this case, the laser beam traces the lines to be cut directly in the protective material and not in the metal. The non-through cuts are therefore actually made by means of an electropolishing process. The elimination of the metallic material takes place by means of an electrolytic method (electrical polishing). Lastly, the layer of protective material is removed.

The use of the laser beam for machining which directly obtains the non-through cuts on the disc has been discussed in various publications over recent years, such as in patent CA 1304650. It has been well established that laser machining is a material removal process based on the transport of photon energy into the target material. This energy removes the material by means of two physical effects: either by melting and removal of the molten material or by vaporization of the material after melting or direct ablation.

Document US 2006/0237457 discloses that using a laser beam directly on a disc for providing a non-through cut is not satisfactory for a number of reasons, mainly because lasers significantly heat and burn the disc, oxidise the material and change the metallurgy of the metal. Therefore, according to this publication, it is impossible to provide a non-through cut through direct vaporization or ablation of the material, thus annulling or rendering irrelevant the melting of the material.

Other documents state that, when a laser is used with an adequate selection of laser beam and process parameters, the heat-affected zone is narrow and the resolidified layer is of micron dimensions. Various tests have shown that the heat-affected zone is of such small dimensions that it does not negatively affect the overall mechanical characteristics or the performance of the disc for the range of commercial applications typical of a safety disc device.

However, it is not always permissible (in terms of performance of the safety disc) to have a resolidified layer of micron dimensions close to the non-through cut.

All the above-mentioned techniques describe safety discs which have non-through incisions having a width greater than 600 micron.

This value, in the case of safety discs having extremely small thicknesses in the range of 15-20 µm, can in proportion be too large, preventing the possibility to obtain reliable safety discs with such thin thicknesses. Therefore, a lower limit to the thickness of safety discs which can be used is imposed above all by the dimensions of the non-through cuts which can be achieved.

Moreover, a fundamental feature which the safety discs must have is a high degree of repeatability.

In other words, safety discs having predetermined characteristics in terms of thickness, type of material and dimensions of the non-through cuts and which are made according to precise methods must all fail always at the same predetermined pressure limit, with a margin of error which, according to international safety standards, is typically between ±5%.

Discs at failure having a margin of error reduced further would be favourable as they would be even more precise and reliable.

In this context, the aim of this invention is to provide a safety disc without the above-mentioned drawbacks.

More specifically, the aim of this invention is to provide a safety disc with a predetermined failure threshold which is extremely reliable, precise and with a high level of repeatability, having a margin of error less than that set by the international safety standards.

Moreover, the aim of this invention is to provide a safety disc with a predetermined failure threshold having non-through cuts with very small dimensions both in depth and width, in such a way as to be able to use extremely small thicknesses of material in the range of 15-20 µm.

A further aim of this invention is to provide a safety disc with a predetermined failure threshold having an insignificant resolidified layer close to the non-through cut, in such a way as to not alter in any way the crystalline structure of the material close to the incisions.

The technical purpose indicated and the aims specified are substantially achieved by means of a safety disc with a predetermined failure threshold as claimed in one or more of the appended claims.

Further features and advantages of the invention are more apparent in the detailed description below, with reference to a preferred, non-limiting, embodiment of a safety disc as illustrated in the accompanying drawings, in which:
- Figure 1 is a perspective view of a safety disc according to this invention;
   - - Figure 2 is a cross-section of the disc of Figure 1 along the line II-II;
   - - Figure 3 is a perspective view of a second embodiment of a safety disc according to this invention;
- Figures 4 to 6 show enlargements of three different cross-sections of non-through cuts made on the safety disc according to this invention, according to three different combinations of cut width and depth parameters.

With reference to the accompanying drawings, a safety disc according to this invention is denoted by the numeral 1.

The safety disc 1 is mounted in pneumatic or hydraulic systems along safety conduits. More specifically, the safety disc 1 completely closes the opening of the conduit on which it is applied and comprises a first surface 1a and a second surface 1b. The fluid under pressure acts on one surface and the external ambient pressure acts on the other surface.

If the fluid acting on the first surface has a pressure higher than a threshold value, the safety disc 1 opens, tearing itself in such a way as to allow the transit of the fluid in the safety conduit and allow the discharge of an excess pressure into an outside environment or, in the case of vacuum protection conditions, allow the entry into the system of fluid from outside the system.

The safety disc 1 is a foil element 3, that is to say, an element having a very small thickness relative to its other two dimensions, on at least one surface of which there is at least one score or non-through cut 2.

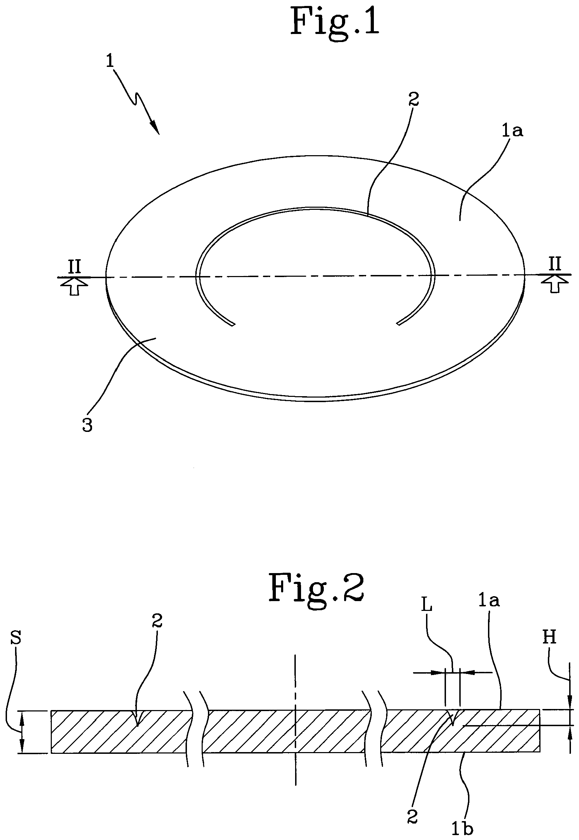

According to the embodiment of Figure 1, the foil element 3 is a planar disc which may have different shapes according to the shape of the conduit on which it must be applied.

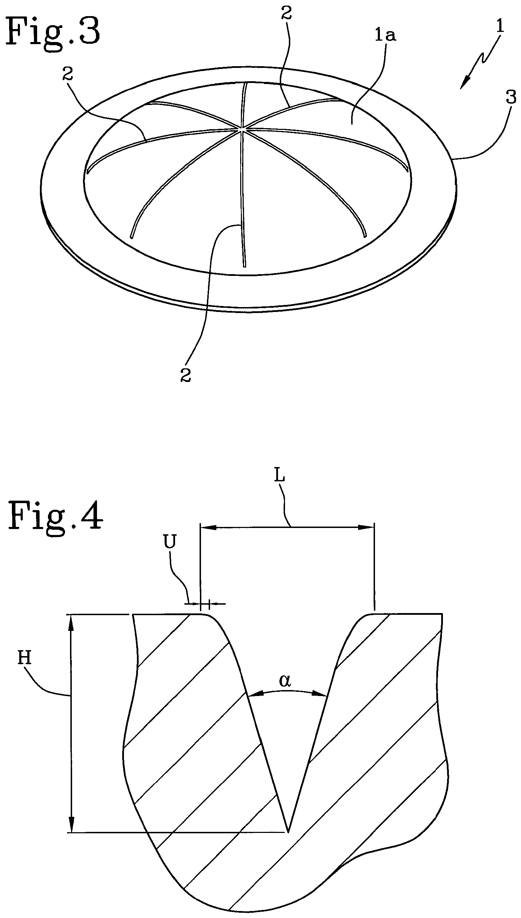

According to another embodiment shown in Figure 3, the foil element 3 is a dome-shaped element which may have different shapes according to the shape of the conduit on which it must be applied. The dome-shaped safety disc can be designed for use at a specified pressure when the pressure is applied on the concave side (forward acting or tension failure disc) or it can be designed for use at a specified pressure when the pressure is applied on the convex side (compression failure disc). This type of safety disc is known as "reverse type", as the failure process starts with the overturning of the convex portion. The safety disc of the reverse type is particularly adapted for use when the acting pressure varies in a cyclic manner because the cyclic stresses do not give rise to modifications in the crystalline-metallurgic structure due to fatigue.

The safety disc 1 comprises at least one non-through score, incision or cut 2 formed in a surface 1a along a working line.

In the embodiments described, the safety disc 1 comprises two, four or six scores or non-through cuts 2 of rectilinear shape arranged in an axially symmetric configuration. However, the number, shape and arrangement of the scores can vary depending on the operating requirements.

There can, for example, be a single non-through cut which can be radially rectilinear, as shown in Figure 3, or circular, as shown in Figure 1.

Moreover, the non-through cuts 2 can be made only on one surface, for example on the concave side or on the convex side, or on both sides.

The disc 1 is preferably made of metal material, such as stainless steel, nickel, aluminium or other metals such as titanium or tantalum or special metal alloys.

Alternatively, the disc 1 can be made of graphite, plastic material, glass-ceramic materials.

According to this invention, the above-mentioned scores or non-through cuts 2 are obtained by a pulse laser acting directly on the surface of the foil element 3.

In particular, the scores are obtained by material removal through ablation. The ablation process is obtained by raising the temperature of the material above the material's boiling point at a very fast rate in order to directly vaporize and thus remove the material without melting or oxidizing the surrounding area. Clearly, such a process is an ideal process, namely the areas surrounding the removed material are, actually, molten and oxidized to some extent.

The non-through cuts of safety discs should be obtained by reducing as much as possible the molten and oxidized area in the regions surrounding the scores.

As mentioned above, some publications state that it is practically impossible to obtain non-through cuts in safety discs using a laser machining directly on the surface of the disc.

Other authors have discovered and clarified that the capabilities and limitations of laser machining are dependant on the physical processes occurring in the laser beam interaction with the material. According to these authors, when using laser scoring the heat-affected zone is narrow and the resolidified layer is of micron dimensions; the score depth for each laser pass is between 6 µm and 168 µm. This result seems to be the best one attainable.

Using a laser technique, the Applicant has obtained discs having non-through incisions or cuts which are extremely precise, considerably limited and significantly better in terms of chemical-physical and structural characteristics. The Applicant has also obtained non-through incisions having width L less than 200 µm and/or ratio between width L and depth H less than 2. Moreover, it has been observed that the incision angle α is less than 90°

The safety disc 1 comprises a foil element 3 having a thickness s of at least 10 µm. The upper limit of this thickness s is purely indicative and linked above all to the use which the safety disc must have and the operating pressure to which it must withstand. In the specific case, the safety discs 1 have a maximum thickness in the range of 1-2 mm.

Preferably, the safety disc 1 has a thickness s of between 15 µm and 800 µm.

Preferably, the foil element 3 is made of metal material, such as, for example, stainless steel, aluminium or special alloys of any type.

The Applicant has surprisingly been able to obtain safety discs having non-through cuts 2 having a width L less than or equal to 200 µm.

More specifically, the width L is preferably between 30 µm and 200 µm.

The lower limit is substantially an intrinsic physical limit depending on the apparatus used for producing the incisions. In the case, for example, of apparatus which uses laser beams, this limit lies within the focus of the laser beam.

However, the achievement of non-through cuts 2 having widths of even less than 30 µm is not excluded.

Using various experimental tests, the Applicant has also surprisingly been able to obtain non-through cuts 2 having a ratio (L/H) between width L and depth H less than or equal to 2.

In other words, it has been observed that with depth H between 15 µm and 500 µm a ratio L/H less than 2 is still obtained.

More specifically, with a depth H less than or equal to 400 µm a width L of the non-through cut of less than or equal to 200 µm is maintained.

It is also possible to obtain a greater depth H, however the width L of the cut could increase.

The maximum depth value H mentioned above is really only an example, since the depth value H is limited above all by structural restraints imposed by the thickness of the disc and by the degree of resistance to be achieved with the disc.

However, with regard to the lower depth limit H, too low a value, close to zero, is not significant as it would serve no technical purpose: in order to make a safety disc, one must necessarily make an incision and remove material to create a line of weakness.

Figures 4 to 6 show enlargements of three different cross-sections of non-through cuts 2 obtained with different combinations of cut width and depth.

A unit of reference U equal to 10 µm is shown alongside each drawing.

More specifically, Figure 3 shows the cross-section of a cut having width L of approximately 140 µm and depth H of approximately 250 µm, enlarged by approximately 300 times relative to the true measurements.

Figure 4 shows the cross-section of a cut having width L of approximately 100 µm and depth H of approximately 150 µm, enlarged by approximately 500 times relative to the true measurements.

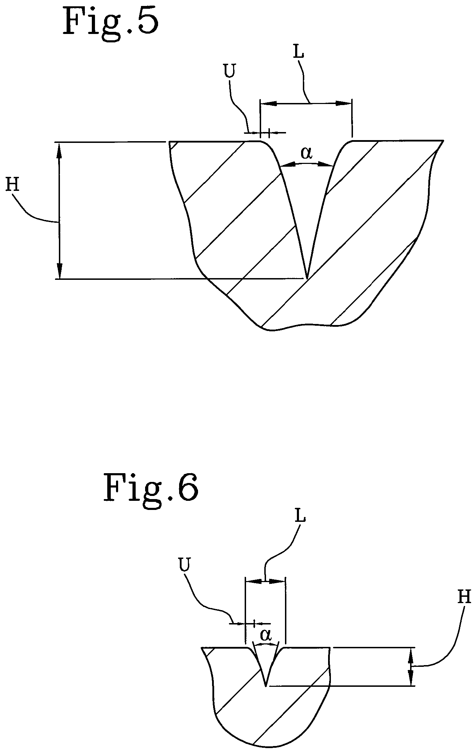

Figure 5 shows the cross-section of a cut having width L of approximately 40 µm and depth H of approximately 42 µm, enlarged by approximately 500 times relative to the true measurements.

In all three cases, the triangular shape of the profile in the cross-section of the cut can be seen, even though, depending on the intensity of the laser or the number of passes, the cross-section profile of the non-through cut 2 can also be trapezoidal, rounded, crown shaped or of another shape.

In any case, the average angle α of penetration of non-through cuts 2 is acute and less than 90° for any depth H greater than 30 µm, in particular for depth H greater than 50 µm.

An incision with an acute angle allows the force to be concentrated in a very precise and limited area, thereby guaranteeing greater precision and effectiveness of the disc.

Another aspect of particular significance is that the depth H of the non-through cut 2 is preferably between 20% and 90% of the total thickness of the foil element defining the disc 1.

More specifically, using the femtosecond laser it is possible to use foil elements 3 with an extremely small thickness, even in the range of 15 µm-20 µm, being able to make non-through cuts in surfaces and without significant alteration of the residual material.

The dimensional parameters and the number of non-though cuts 2 made on a safety disc are selected on the basis of the failure pressure which the disc must withstand, and the size and thickness of the disc; in other words the safety disc must be calibrated.

In the field of application/operation of this invention, the term "calibrate" means the calibration of the dimensional characteristics (for example, shape, thickness, depth and type of the cuts and so on) of a safety disc in such a way as to reduce the thickness of the material by ablation, preferably with a laser beam, so as to leave in a predetermined area, advantageously along one or more lines with desired geometry, a layer of the original material with unaltered characteristics having a reduced thickness.

This provides a failure pressure corresponding exactly to the desired pressure, improving at the same time the failure characteristics of the disc and in such a way as to create predetermined failure lines activated by predetermined pressure (or, more precisely, predetermined during design of the safety disc).

An important and surprising advantage found in the safety discs described and according to this invention, characterised by incisions with ratio between width L and depth H less than 2 produced using the femtosecond laser, is the extremely high level of repeatability of the machining in a series of discs.

This feature is fundamental for the safety discs as the failure pressure must be guaranteed to be the same and always equal for any disc having predetermined characteristics in terms of dimensions, material and structure of the cut.

The Applicant has performed five experimental tests using stainless steel safety discs, convex or dome shaped, with a nominal diameter of 50 mm and a thickness of 200 µm, on which six incisions with the same width and depth have been made in the outer part (it is therefore a forward acting disc working in tension).

The experimental tests have given an almost constant failure pressure value, with standard deviations of 0.5% with respect to the average pressure value, compared with a typical error permitted by the international safety standards of 5%.

The level of repeatability obtained for these discs is without doubt exceptional.

According to what has been stated previously, the safety disc according to this invention allows significant advantages to be obtained which are not present in the prior art.

The discs obtained using the femtosecond laser technique have non-through incisions or cuts which are extremely precise, having small dimensions and above all without machining waste inside, having a clean and well defined profile.

In this way, the mechanical and chemical-physical features of the safety disc, even at the lines subject to machining, are not significantly modified, in fact they remain practically unaltered, thus guaranteeing a greater safety of the disc.

It is therefore possible to obtain safety discs with extremely high performance levels, with regard to the precision on the failure point, and therefore the high level of repeatability of the machining in a series of discs, and with regard to the duration over time in operating conditions.

## Claims

1. A safety disc comprising a foil element (3) having a thickness (s) of between 15 µm and 1 mm and at least one non-through cut (2) **characterised in that** the non-through cut (2), realized with a femtosecond laser, has a width (L) less than or equal to 200 µm and a ratio between width (L) and depth (H) less than or equal to 2.

2. The safety disc according to claim 1, **characterised in that** the non-through cut (2) has a width (L) of between 30 µm and 200 µm.

3. The safety disc according to any one of the preceding claims, **characterised in that** the non-through cut (2) has an acute penetration angle (α) less than or equal to 90°.

4. The safety disc according to any one of the preceding claims, **characterised in that** the non-through cut (2) has a depth (H) of between 20% and 90% of the thickness (s) of the foil element (3).

5. The safety disc according to any of the preceding claims, **characterised in that** the foil element (3) is planar.

6. The safety disc according to any one of claims 1 to 4, **characterised in that** the foil element (3) is dome shaped.

7. The safety disc according to the preceding claim, **characterised in that** it has at least one through cut (2) on the concave side or on the convex side or on both the sides.

8. Method for obtaining safety discs having a high level of repeatability comprising the step of providing a foil element (3) having a thickness (s) of between 15 µm and 1 mm, **characterized in** the step of realizing with a femtosecond laser at least one non-through cut (2) having a width (L) less than or equal to 200 µm and a ratio between width (L) and depth (H) less than or equal to 2.

9. Method according to claim 8, **characterized in** realizing the non-through cut (2) with an acute penetration angle (α) of the femtosecond laser less than or equal to 90°.

10. Method according to claim 8 or 9, **characterized in** realizing the non-through cut (2) with a width (L) of between 30 µm and 200 µm.

11. Method according to one of claims from 8 to 10, **characterized in** realizing the non-through cut (2) having a depth (H) of between 20% and 90% of the thickness (s) of the foil element (3).

12. Method according to one of claims from 8 to 11, **characterized in** realizing at least one through cut (2) on the concave side or on the convex side or on both the sides.

## Patentansprüche

1. Sicherheitsscheibe, umfassend ein Folienelement (3), aufweisend eine Dicke (s) zwischen 15 µm und 1 mm, und mindestens einen nicht durchgehenden Einschnitt (2), **dadurch gekennzeichnet, dass** der nicht durchgehende Einschnitt (2), ausgeführt mit einem Femtosekundenlaser, eine Breite (L) kleiner oder gleich 200 µm und ein Verhältnis zwischen Breite (L) und Tiefe (H) kleiner oder gleich 2 aufweist.

2. Sicherheitsscheibe nach Anspruch 1, **dadurch gekennzeichnet, dass** der nicht durchgehende Einschnitt (2) eine Breite (L) zwischen 30 µm und 200 µm aufweist.

3. Sicherheitsscheibe nach einem der vorhergehenden Ansprüche, **dadurch gekennzeichnet, dass** der nicht durchgehende Einschnitt (2) einen spitzen Eindringwinkel (a) kleiner oder gleich 90° aufweist.

4. Sicherheitsscheibe nach einem der vorhergehenden Ansprüche, **dadurch gekennzeichnet, dass** der nicht durchgehende Einschnitt (2) eine Tiefe (H) zwischen 20 % und 90 % der Dicke (s) des Folienelements (3) aufweist.

5. Sicherheitsscheibe nach einem der vorhergehenden Ansprüche, **dadurch gekennzeichnet, dass** das Folienelement (3) ebenflächig ist.

6. Sicherheitsscheibe nach einem der Ansprüche 1 bis 4, **dadurch gekennzeichnet, dass** das Folienelement (3) kuppelförmig ist.

7. Sicherheitsscheibe nach dem vorhergehenden Anspruch, **dadurch gekennzeichnet, dass** sie mindestens einen durchgehenden Einschnitt (2) an der konkaven Seite oder an der konvexen Seite oder an beiden Seiten aufweist.

8. Verfahren zum Erhalten von Sicherheitsscheiben, aufweisend einen hohen Wiederholbarkeitsgrad, umfassend den Schritt zum Bereitstellen eines Folienelements (3), aufweisend eine Dicke (s) zwischen 15 µm und 1 mm, **gekennzeichnet durch** den Schritt zum Ausführen von mindestens einem nicht durchgehenden Einschnitt (2), aufweisend eine Breite (L) kleiner oder gleich 200 µm und ein Verhältnis zwischen Breite (L) und Tiefe (H) kleiner oder gleich 2, mit einem Femtosekundenlaser.

9. Verfahren nach Anspruch 8, **dadurch gekennzeichnet, dass** der nicht durchgehende Einschnitt (2) einen spitzen Eindringwinkel (a) des Femtosekundenlasers kleiner oder gleich 90° aufweist.

10. Verfahren nach Anspruch 8 oder 9, **dadurch gekennzeichnet, dass** der nicht durchgehende Einschnitt (2) mit einer Breite (L) zwischen 30 µm und 200 µm ausgeführt wird.

11. Verfahren nach einem der Ansprüche 8 bis 10, **dadurch gekennzeichnet, dass** der nicht durchgehende Einschnitt (2), aufweisend eine Tiefe (H) zwischen 20 % und 90 % der Dicke (s) des Folienelements (3), ausgeführt wird.

12. Verfahren nach einem der Ansprüche 8 bis 11, **dadurch gekennzeichnet, dass** mindestens ein durchgehender Einschnitt (2) an der konkaven Seite oder an der konvexen Seite oder an beiden Seiten ausgeführt wird.

## Revendications

1. Disque de sécurité comprenant un élément de feuille (3) ayant une épaisseur (s) comprise entre 15 µm et 1 mm et au moins une coupe non traversante (2), **caractérisé en ce que** la coupe non traversante (2), réalisée avec un laser femtoseconde, a une largeur (L) inférieure ou égale à 200 µm et un rapport entre la largeur (L) et la profondeur (H) inférieur ou égal à 2.

2. Disque de sécurité selon la revendication 1, **caractérisé en ce que** la coupe non traversante (2) a une largeur (L) comprise entre 30 et 200 µm.

3. Disque de sécurité selon l'une quelconque des revendications précédentes, **caractérisé en ce que** la coupe non traversante (2) comporte un angle de pénétration aigu (a) inférieur ou égal à 90°.

4. Disque de sécurité selon l'une quelconque des revendications précédentes, **caractérisé en ce que** la coupe non traversante (2) a une profondeur (H) comprise entre 20 et 90 % de l'épaisseur (s) de l'élément de feuille (3).

5. Disque de sécurité selon l'une quelconque des revendications précédentes, **caractérisé en ce que** l'élément de feuille (3) est planaire.

6. Disque de sécurité selon l'une quelconque des revendications de 1 à 4, **caractérisé en ce que** l'élément de feuille (3) a la forme d'un dôme.

7. Disque de sécurité selon la revendication précédente, **caractérisé en ce qu'**il comporte au moins une coupe traversante (2) sur le côté concave ou sur le côté convexe ou sur les deux côtés.

8. Procédé pour obtenir des disques de sécurité ayant un haut niveau de répétabilité comprenant l'étape consistant à prévoir un élément de feuille (3) ayant une épaisseur (s) comprise entre 15 µm et 1 mm, **caractérisé par** l'étape de réalisation, avec un laser femtoseconde, au moins une coupe non traversante (2) ayant une largeur (L) inférieure ou égale à 200 µm et un rapport entre la largeur (L) et la profondeur (H) inférieur ou égal à 2.

9. Procédé selon les revendications 8, **caractérisé par** la réalisation de la coupe non traversante (2) ayant un angle de pénétration aigu (a) du laser femtoseconde inférieur ou égal à 90°.

10. Procédé selon la revendication 8 ou 9, **caractérisé par** la réalisation de la coupe non traversante (2) ayant une largeur (L) comprise entre 30 et 200 µm.

11. Procédé selon l'une quelconque des revendications de 8 à 10, **caractérisé par** la réalisation de la coupe non traversante (2) ayant une profondeur (H) comprise entre 20 et 90 % de l'épaisseur (s) de l'élément de feuille (3).

12. Procédé selon l'une quelconque des revendications de 8 à 11, **caractérisé par** la réalisation d'au moins une coupe traversante (2) sur le côté concave ou sur le côté convexe ou sur les deux côtés.
